(19) Europäisches Patentamt
European Patent Office
Office européen des brevets

(11) EP 1 557 887 A1

(12) EUROPEAN PATENT APPLICATION

(43) Date of publication:
27.07.2005 Bulletin 2005/30

(51) Int Cl.[7]: **H01L 27/148**, H04N 3/15, H04N 5/335

(21) Application number: 04250324.3

(22) Date of filing: 22.01.2004

(84) Designated Contracting States:
AT BE BG CH CY CZ DE DK EE ES FI FR GB GR HU IE IT LI LU MC NL PT RO SE SI SK TR
Designated Extension States:
AL LT LV MK

(71) Applicant: STMicroelectronics Limited
Marlow, Buckinghamshire SL7 1YL (GB)

(72) Inventors:
- Purcell, Matthew
Edinburgh EH11 1AX (GB)
- LaFlaquiere, Arnauld
Edinburgh EH9 1DL (GB)

(74) Representative: Cooper, John et al
Murgitroyd & Company,
Scotland House,
165-169 Scotland Street
Glasgow G5 8PL (GB)

# (54) Image sensor power supply

(57) Image sensor quality can be affected by power supply ripple caused by different loads on the power supply or through electromagnetic interference affecting the image sensor reference supplies. Improved reference voltage supplies are disclosed, minimising the effects of power supply ripple through Ahuja compensation and utilising parasitic capacitance.

**Fig.4**

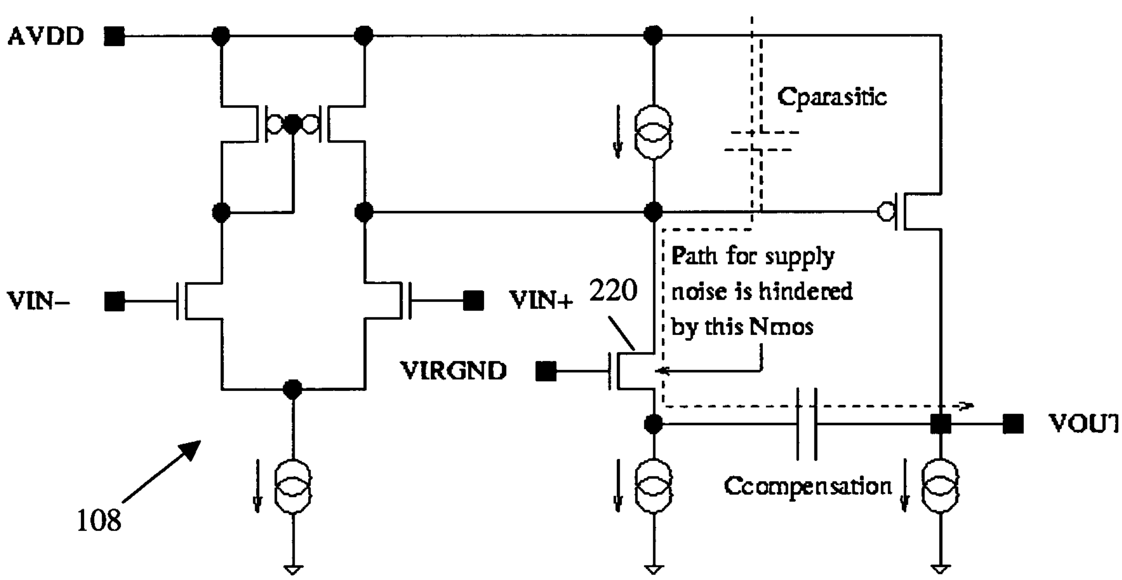


EP 1 557 887 A1

## Description

The present invention relates to a power supply for an image sensor and in particular, but not exclusively, for improving the power supply ripple rejection (PSRR) of reference power supplies for an image sensor.

Many mobile devices and, in particular, mobile telephones incorporate cameras based on silicon image sensor technology. These mobile devices often have other functions other than as a camera such as, for example, a mobile telephone, a bluetooth communication device or a MP3 (Moving Pictures Experts Group 3 or MPEG3) player. As these mobile devices require to maximise the lifetime that they can operate on a single battery charge, any function that is not required is usually switched off or put into a low power mode. Consequently, any reference voltage or current supplies on the device may vary slightly depending on the functions that are currently operating or even depending on the state of the battery itself. Other causes of power fluctuations can include electromagnetic interference from other devices or other functions within the same device.

An image sensor, or pixel, requires reference voltage and/or current supplies to enable the switching of transistor gates and the readout of a photodiode, or other light-detecting device. An amplifier acting as a regulator of the battery supply is normally used to supply the reference voltages. Variance in the reference voltages can impact on the value read out from the pixel. Typically, the battery supply voltage can vary by ±100mV whereas the sensitivity associated with a pixel is typically ±100)iV. Hence, the reference voltages may vary by a greater degree than the sensitivity of the pixel.

To enable an image to be created, the values of an array of pixels are read out. This is usually done one row at a time. If any of the reference supplies vary during the read out of the array of pixels, inconsistencies between individual pixels can occur. In general, the image quality can be adversely affected by changes in the reference voltage and current supplies.

For example, consider a three-transistor (3T) pixel, as shown in Fig. 1, operating with a double sampling timing. To describe the intended operation of the pixel it will be assumed that all reference supplies are ideal.

For the first sample reading, the pixel is first reset, by turning on transistors MRD and MRST. This causes a node VPIX to be pulled up to a pixel reference voltage VRT. The pixel is then released, by turning off transistors MRD and MRST, so that it can start integrating. By doing so, charge injection from MRST causes a drop in the voltage of VPIX, thus:

$$VPIX = VRT - V_{inj}$$

The pixel's capacitor CPIX is then discharged by the photo-diode current $I_{pd}$, leading to:

$$VPIX = VRT - V_{inj} - \left(\frac{I_{pd} \cdot t}{CPIX}\right)$$

Once the integration time is over, MRD is turned on and the buffered value of VPIX, that is an output node VX, is read out. Ideally it is equal to:

$$VX = VPIX - V_{GS}(MBUF) = VRT - V_{inj} - \left(\frac{I_{pd} \cdot t}{CPIX}\right) - V_{GS}(MBUF)$$

The first sample measured value of VX contains not only information about ambient light, but also information about the pixel's offsets and is stored as VSIG.

To eliminate the offset, a second sample reading is made by turning on MRST (VPIX = VRT), then turning it off (VPIX = VRT - $V_{inj}$), leading to a second sample measurement, referred to as VBLK, equal to:

$$VBLK = VX = VRT - V_{inj} - V_{GS}(MBUF)$$

Information about luminosity can be determined by subtracting VSIG from VBLK leading to a value of VLUM:

$$VLUM = VSIG - VBLK = \left(\frac{I_{pd} \cdot t}{CPIX}\right)$$

Now let us look at how variations on RSTHI, RDHI, VRT and ICOL affect the measurement of light. At first the pixel is reset:

$$VPIX = VRT + \partial VRT_1$$

The pixel is then released for integration, which leads to a sudden decrease in VPIX. However, this injection is not ideal and has a dependency on the supply RSTHI such that:

$$VPIX = VRT + \partial VRT_1 - V_{inj} - (A \cdot \partial RSTHI_1 \cdot V_{inj})$$

Where A represents a technology dependent constant related to the supply RSTHI.

The pixel then integrates, leading to:.

$$VPIX = VRT + \partial VRT_1 - V_{inj} - \left(A \cdot \partial RSTHI \cdot V_{inj}\right) - \left(\frac{I_{pd} \cdot t}{CPIX}\right)$$

Once the integration time is over, VX is read out and is equal to VPIX - $V_{GS}$(MBUF). However, the transistor MRD is not a perfect switch and an offset dependant on RDHI will be introduced. Let us name it B x $\delta RDHI_1$. Where B represents a technology dependent constant related to the supply RDHI.

The Vgs drop of MBUF is dependant on ICOL, thus an offset $\delta V_{GS}$ $(MBUF)_1$ needs to be added to $V_{GS}$(MBUF). This first sample measurement VSIG is now:

$$VSIG = VRT + \partial VRT_1 - V_{inj} - \left(A \cdot \partial RSTHI_1 \cdot V_{inj}\right) - \left(\frac{I_{pd} \cdot t}{CPIX}\right)$$
$$- V_{GS}(MBUF) - \partial V_{GS}(MBUF)_1 + \left(B \cdot \partial RDHI_1\right)$$

To eliminate the offset's of the pixel, a second measurement is made by turning on MRST (VPIX = VRT + $\delta VRT_2$), then turning it off:

$$VPIX = VRT + \partial VRT_2 - V_{inj} - (A \cdot \partial RSTHI_2 \cdot V_{inj})$$

This value is then measured as VBLK, which would be equal to:

$$VBLK = VPIX = VRT + \partial VRT_2 - V_{inj} - (A \cdot \partial RSTHI_2 \cdot V_{inj}) - V_{GS}(MBUF)$$
$$- \partial V_{GS}(MBUF)_2 + (B \cdot \partial RDHI_2)$$

As done previously, the information about luminosity can be extracted by subtracting VSIG from VBLK, leading to a value of VLUM as follows:

$$VLUM = \left(\frac{I_{pd} \cdot t}{CPIX}\right) + \partial VRT_2 - \partial VRT_1 - A \cdot V_{inj}\left(\partial RSTHI_2 - \partial RSTHI_1\right) + B\left(\partial RDHI_2 - \partial RDHI_1\right) - \left(\partial V_{GS}(MBUF)_2 - \partial V_{GS}(MBUF)_1\right)$$

Clearly, VLUM is affected by supply variations and the quality of the measurement is affected.

Previously, little or no attention has been paid to the degradation caused by varying reference supplies to an image sensor. Research has instead concentrated on other aspects of degradation such as fixed pattern noise or reset noise. However, as mobile devices are integrated with many new circuits and functions this source of loss of image quality is likely to become more prevalent.

An object of the present invention is obviate or mitigate image sensor degradation caused by varying reference supplies.

According to the present invention there is provided an image sensor comprising:

a supply voltage;
at least one reference voltage;
at least one power supply ripple rejection circuit including an input connected to the supply voltage and an output connected to the at least one reference voltage wherein the power supply ripple rejection circuit reduces the effect of variance in the supply voltage on the at least one reference voltage.

Preferably, the image sensor comprises a first sensor reference voltage, a second read reference voltage and a third reset reference voltage.

Preferably, the power supply ripple rejection circuit is an amplifier.

Preferably, the amplifier comprises Ahuja compensation.

Alternatively, the power supply ripple rejection circuit enabled to output the first sensor reference voltage comprises a transistor, wherein the transistor is enabled as a source follower, the image sensor acting as a load of the source follower.

Such an architecture is more current efficient than having a standard regulator. From a layout perspective, it can be column based, making the system compact and easily scalable.

The parasitic capacitance of the pixel array associated with a transistor of the above embodiment is sufficient to allow rejection of variance in the supply voltage.

Embodiments of the present invention will now be described with reference to the accompanying drawings, in which;

Fig. 1 shows a schematic diagram of a three-transistor pixel;

Fig. 2 shows a schematic diagram of a three-transistor pixel with reference power supplies;

Fig. 3 shows a schematic diagram of prior-art two stage amplifier for use reference voltage supply;

Fig. 4 shows a schematic diagram of a two stage amplifier for use in the present invention;

Fig. 5 shows an alternative embodiment of a reference power supply connected to a light detecting device.

Referring to Fig. 2, a pixel 100 is shown which comprises a photodiode (not shown), a first read transistor 102, a second reset transistor 104 and a third transistor 106. The photodiode voltage will be present at the gate of the third transistor 106. The third transistor 106 is used as a source follower to enable the photodiode voltage to be read out.

The pixel 100 requires four reference supplies to enable correct operation. A first reference voltage VRT, a second reference voltage RSTHI, a third reference voltage RDHI and a first bias reference current ICOL. To enable a reset operation on the pixel 100, a reset signal RST is received which enables the reset reference voltage RSTHI to operate the reset transistor 104. Similarly, to enable a read operation on the pixel 100, a read signal RD is received which enables the read reference voltage RDHI to operate the read transistor 102.

If the first reference voltage VRT varies during a read operation of an array of pixels, image output quality is affected through inconsistencies in the pixel readout voltage. It has also been discovered that if the second reference voltage RSTHI or the third reference voltage RDHI vary during a read operation, image output quality is also affected. Consequently, it is desirable to prevent the reference voltages VRT, RSTHI and RDHI from varying.

To provide the reference voltages VRT, RDHI, RSTHI a non-inverting voltage amplifier 108 is used. The non-inverting voltage amplifier 108 has a circuit (108) as shown in Fig. 4. The circuit 108 is based on a two-stage amplifier with Ahuja frequency compensation (as described in B.K Ahuja, "An improved frequency compensation technique for CMOS operational amplifiers", IEEE Journal of Solid State Circuits, vol 18, pp629-633, 1983).

A sourcing general Miller Amplifier, as shown in Fig. 3, suffers from poor supply rejection at higher frequencies, as the supply noise is directly connected to the output of the amplifier via a compensation capacitor $C_{compensation}$ and the parasitic capacitance $C_{parasitic}$. Ahuja compensation eliminates this path by inserting transistor 220 (Fig. 4) in the path from the positive supply to the output, whilst still providing phase compensation. Such a solution improves power supply ripple rejection at high frequencies.

Referring now to Fig. 5, the first reference voltage VRT is supplied by a reference transistor 302 instead of the voltage amplifier 108. By replacing the non-inverting voltage amplifier 108 by a reference transistor 302 less current is used with similar results. The capacitance of the reference transistor 302 rejects variance from a supply 304, thereby reducing any variance of the first reference voltage VRT.

Modifications may be made without departing from the scope of the invention. For example, alternative amplifier circuit designs may be used which also eliminate power supply ripple.

## Claims

**1.** An image sensor comprising:

a supply voltage;
at least one reference voltage;
at least one power supply ripple rejection circuit including an input connected to the supply voltage and an output connected to the at least one reference voltage wherein the power supply ripple rejection circuit reduces the effect of variance in the supply voltage on the at least one reference voltage.

**2.** An image sensor as claimed in claim 1, comprising a first sensor reference voltage, a second read reference voltage and a third reset reference voltage.

**3.** An image sensor as claimed in claim 1 or claim 2, wherein the power supply ripple rejection circuit is an amplifier.

**4.** An image sensor as claimed in claim 3, wherein the amplifier comprises Ahuja compensation.

**5.** An image sensor as claimed in claim 2, wherein the power supply ripple rejection circuit enabled to output the first sensor reference voltage comprises a transistor, wherein the transistor is enabled as a source follower, the image sensor acting as a load of the source follower.

Fig. 1

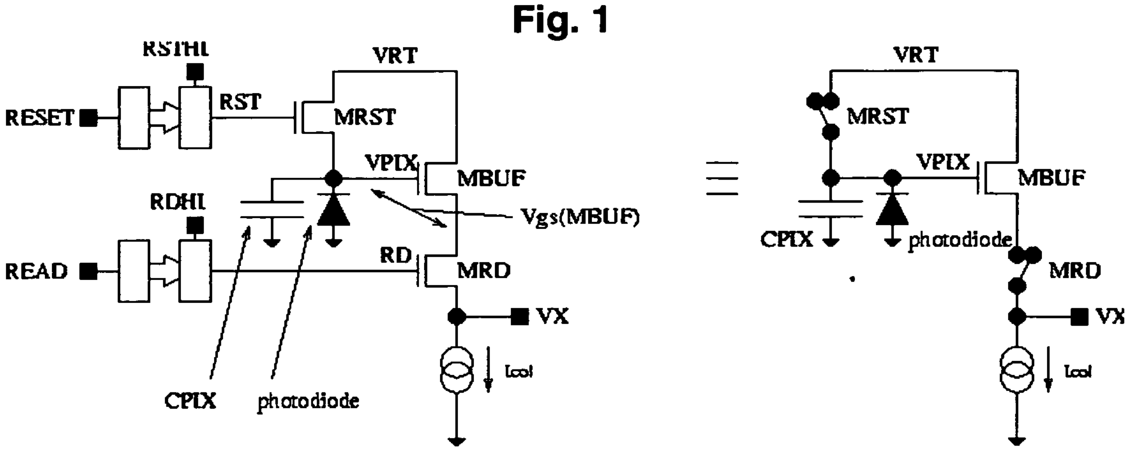


Fig. 2

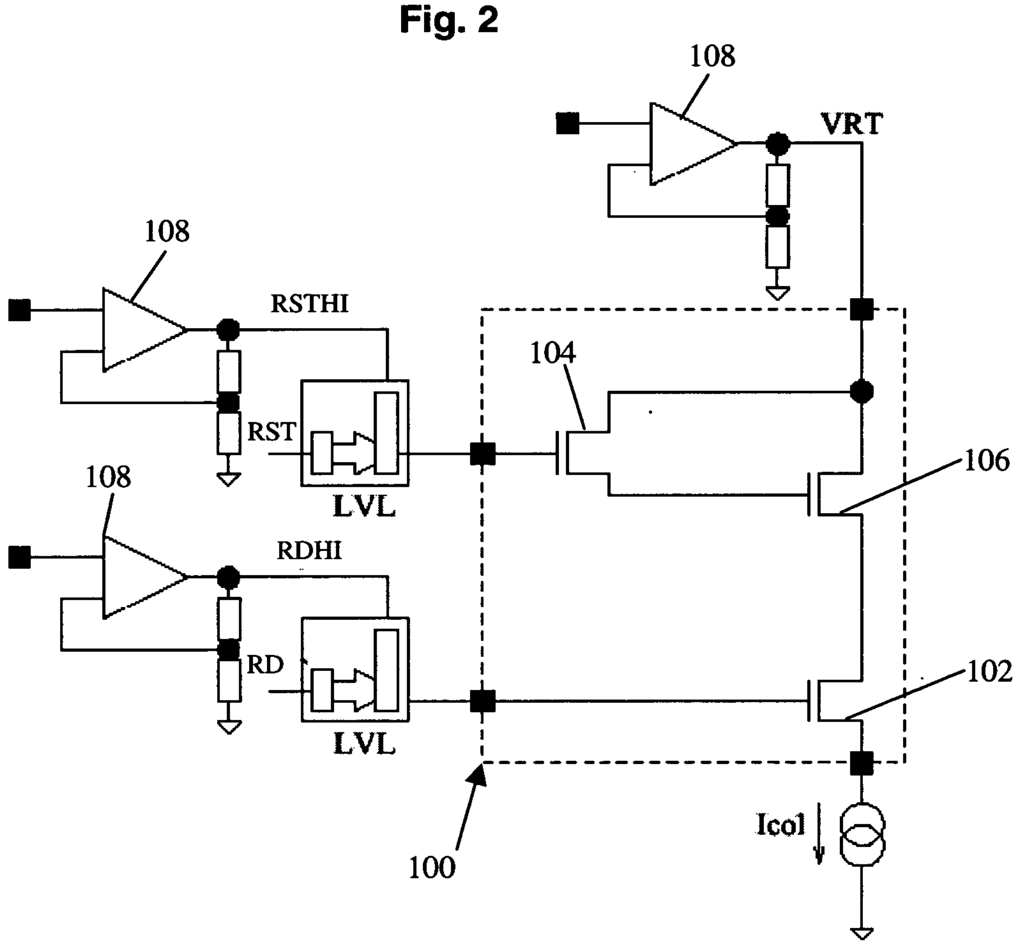


Fig.3

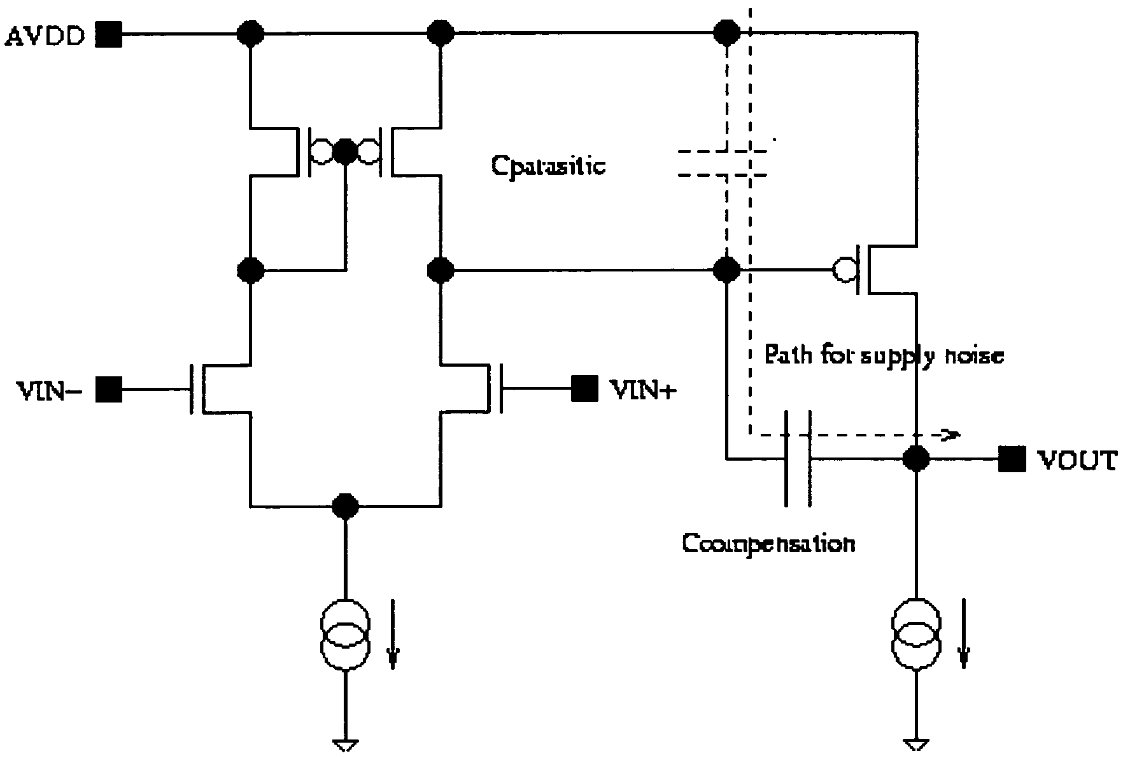
AVDD
Cparasitic
VIN-
VIN+
Path for supply noise
VOUT
Ccompensation

Fig.4

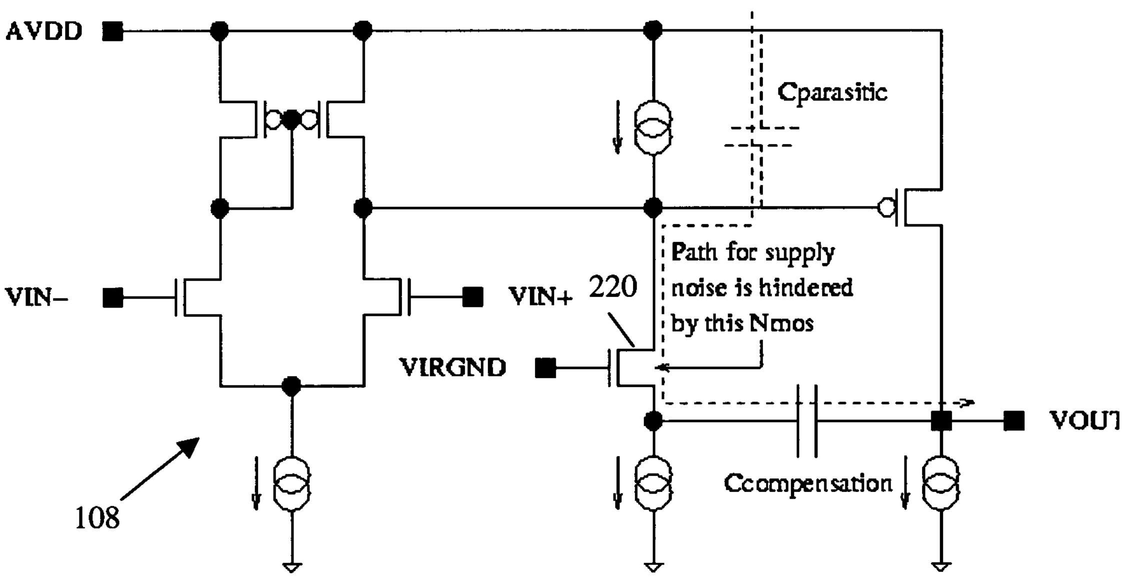
AVDD
Cparasitic
VIN-
VIN+
220
Path for supply
noise is hindered
by this Nmos
VIRGND
VOUT
Ccompensation
108

Fig. 5

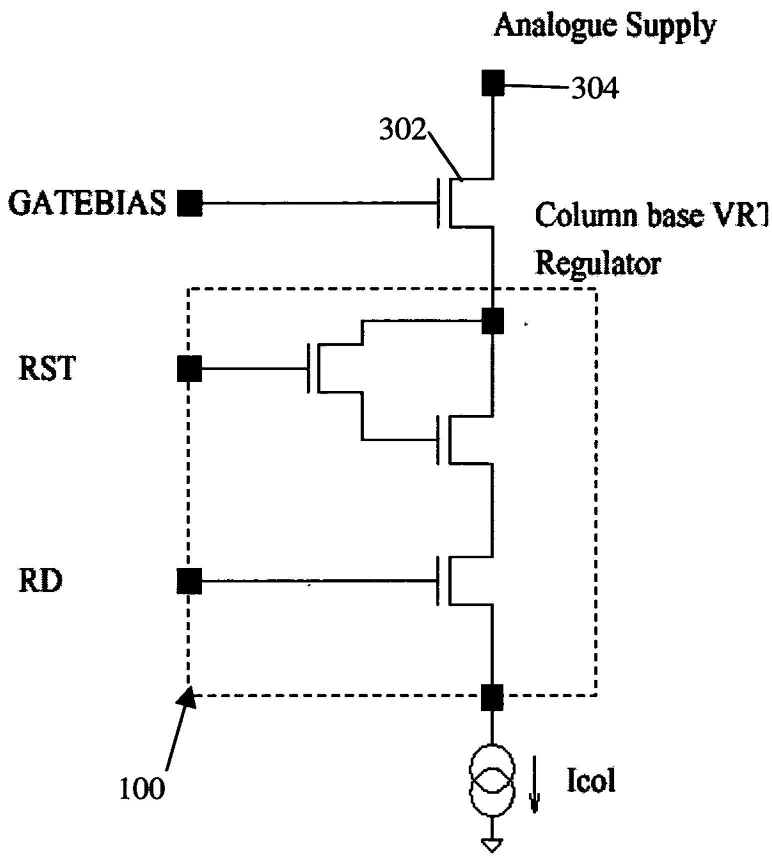
Analogue Supply
304
302
GATEBIAS
Column base VR1
Regulator
RST
RD
100
Icol

European Patent Office

# EUROPEAN SEARCH REPORT

Application Number
EP 04 25 0324

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X<br>Y | WO 99/53683 A (CONEXANT SYSTEMS INC) 21 October 1999 (1999-10-21)<br>* page 4, line 19 - page 10, line 24; figures 4-8 * | 1-3,5<br>4 | H01L27/148<br>H04N3/15<br>H04N5/335 |
| A<br><br>Y | PAVAN KUMAR HANUMOLU: "Design of Low Noise, Low Power Linear CMOS Image Sensors" [Online] 30 April 2001 (2001-04-30), WORCESTER POLYTECHNIC INSTITUTE , XP002289214 Retrieved from the Internet: URL:http://www.ece.wpi.edu/Research/Analog/Theses/pavanthesis.pdf> [retrieved on 2004-07-21]<br>* page 19, line 7 - page 20, line 5 *<br>* page 28, line 12 - page 30, line 8 *<br>* page 35, line 10 - page 44, line 1 *<br>* page 52, line 7 - page 53, line 7 * | 1<br><br>4 | |
| | | | TECHNICAL FIELDS SEARCHED (Int.Cl.7) |
| | | | H01L<br>H04N |

The present search report has been drawn up for all claims

3

| Place of search | Date of completion of the search | Examiner |
|---|---|---|
| Berlin | 21 July 2004 | Oberreich, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT ON EUROPEAN PATENT APPLICATION NO.** EP 04 25 0324

This annex lists the patent family members relating to the patent documents cited in the above-mentioned European search report.
The members are as contained in the European Patent Office EDP file on
The European Patent Office is in no way liable for these particulars which are merely given for the purpose of information.

21-07-2004

| Patent document cited in search report | Publication date | Patent family member(s) | Publication date |
| --- | --- | --- | --- |
| WO 9953683 A | 21-10-1999 | US 6697111 B1 | 24-02-2004 |
| | | AU 2768599 A | 01-11-1999 |
| | | EP 0988749 A1 | 29-03-2000 |
| | | JP 2002501718 T | 15-01-2002 |
| | | TW 420942 B | 01-02-2001 |
| | | WO 9953683 A1 | 21-10-1999 |

EPO FORM P0459

For more details about this annex : see Official Journal of the European Patent Office, No. 12/82